(19) Europäisches Patentamt
European Patent Office
Office européen des brevets

(11) EP 0 829 850 B1

(12) EUROPÄISCHE PATENTSCHRIFT

(45) Veröffentlichungstag und Bekanntmachung des Hinweises auf die Patenterteilung:
**12.12.2001 Patentblatt 2001/50**

(51) Int Cl.[7]: **G10L 15/14**

(21) Anmeldenummer: **97113859.9**

(22) Anmeldetag: **11.08.1997**

(54) **Verfahren zur Zurückweisung unbekannter Wörter bei der Spracherkennung von Einzelworten**

Method of rejection of unknown words in isolated words speech recognition

Procédé de rejet de mots inconnus lors de la reconnaissance de parole de mots isolés

(84) Benannte Vertragsstaaten:
**DE FR GB SE**

(30) Priorität: **17.09.1996 DE 19637882**

(43) Veröffentlichungstag der Anmeldung:
**18.03.1998 Patentblatt 1998/12**

(73) Patentinhaber: **SIEMENS AKTIENGESELLSCHAFT**
**80333 München (DE)**

(72) Erfinder:
- **Höge, Harald, Dr.**
  **82131 Gauting (DE)**
- **Littel, Bernhard**
  **81547 München (DE)**

(56) Entgegenhaltungen:
**WO-A-96/27871**

- **WATANABE T ET AL: "UNKNOWN UTTERANCE REJECTION USING LIKELIHOOD NORMALIZATION BASED ONSYLLABLE RECOGNITION" SYSTEMS & COMPUTERS IN JAPAN, Bd. 24, Nr. 14, Dezember 1993, Seiten 74-84, XP000474593**
- **ITOH Y ET AL: "SENTENCE SPOTTING APPLIED TO PARTIAL SENTENCES AND UNKNOWN WORDS" PROCEEDINGS OF THE INTERNATIONAL CONFERENCE ON ACOUSTICS, SPEECH, SIGNAL PROCESSING (ICASSP), SPEECH PROCESSING 1. ADELAIDE, APR. 19 - 22, 1994, Bd. 1, 19. April 1994, Seiten I-369-I-372, XP000529405 INSTITUTE OF ELECTRICAL AND ELECTRONICS ENGINEERS**
- **LITTEL B ET AL: "Robust single word recognition for telephone applications" SPRACHKOMMUNIKATION (SPEECH COMMUNICATION), FRANKFURT AM MAIN, GERMANY, 17-18 SEPT. 1996, Nr. 139, Seiten 65-68, XP002078389 ISSN 0341-0196, ITG-Fachberichte, 1996, VDE-Verlag, Germany**
- **CHIGIER B: "REJECTION AND KEYWORD SPOTTING ALGORITHMS FOR A DIRECTORY ASSISTANCE CITY NAME RECOGNITION APPLICATION" SPEECH PROCESSING 2, AUDIO, NEURAL NETWORKS, UNDERWATER ACOUSTICS, SAN FRANCISCO, MAR. 23 - 26, 1992, Bd. 2, Nr. CONF. 17, 23. März 1992, Seiten 93-96, XP000356945 INSTITUTE OF ELECTRICAL AND ELECTRONICS ENGINEERS**
- **MORENO P J ET AL: "REJECTION TECHNIQUES IN CONTINUOUS SPEECH RECOGNITION USING HIDDEN MARKOV MODELS" SIGNAL PROCESSING THEORIES AND APPLICATIONS, BARCELONA, SEPT. 18 - 21, 1990, Bd. 2, Nr. CONF. 5, 18. September 1990, Seiten 1383-1386, XP000365816 TORRES L;MASGRAU E; LAGUNAS M A**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 829 850 B1

Printed by Jouve, 75001 PARIS (FR)

## Beschreibung

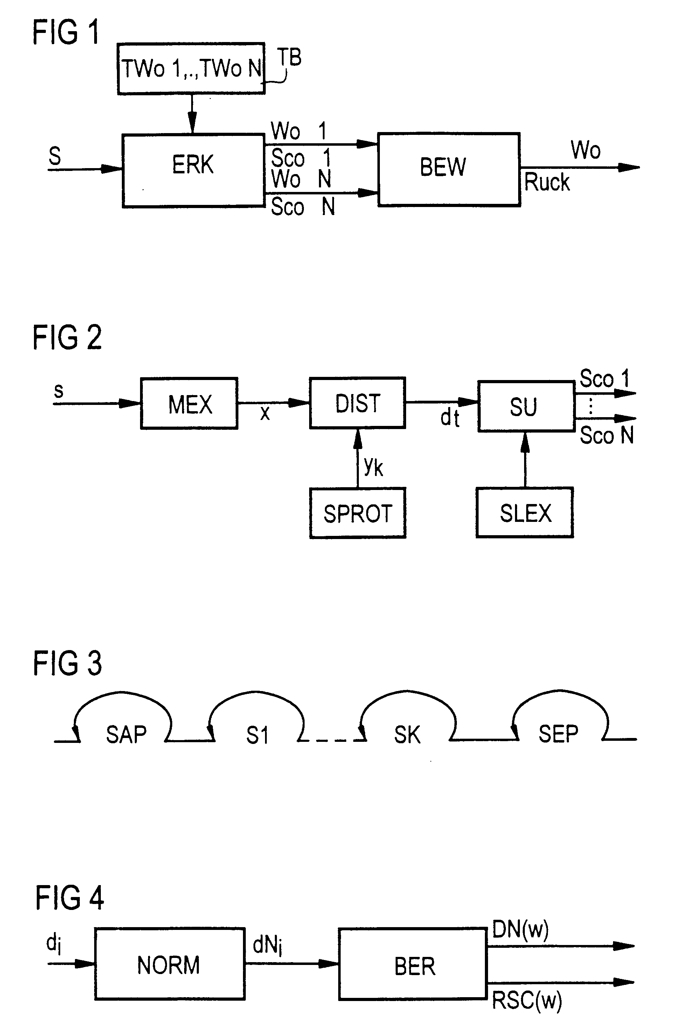

Bei vielen Anwendungen der Spracherkennung tritt das Problem auf, daß der Benutzer ein Wort oder eine Wortfolge spricht, die nicht im Vokabular des Erkenners liegt. Spracherkennungsverfahren sind aus dem Stand der Technik bekannt. Üblicherweise gelangt das Sprachsignal, daß von einem Sprecher aufgenommen wird, zunächst in eine Merkmalextraktionsstufe, in welcher die spektralen Merkmale des Sprachsignales analysiert werden. Diese gelangen im Anschluß in eine Klassifikationsstufe, in der sie mit gespeicherten Mustern, üblicherweise Hidden Markov Modellen verglichen werden und dann als Worte aus dem Spracherkennungssystem ausgegeben zu werden. Ein Beispiel für die Erkennung von Worten in gesprochener Sprache ist in A. Aktas, K. Zünkler: "Speaker independent continuous HMM-Base recognition of isolated words on a real-time multi-DSP-system", PROC. Eurospeech 91,1991 PP. 1345-1348 angegeben. Ein Beispiel für Spracherkennung nach dem Stand der Technik wird auch in Figur 1 erläutert.

Die der Erfindung zu Grunde liegende Aufgabe besteht darin, ein Verfahren anzugeben, welches es ermöglicht bei der Spracherkennung von Einzelworten mit einem Spracherkennungssystem dem Erkenner unbekannte Wörter mit hoher Sicherheit zu detektieren und zurückzuweisen. Diese Aufgabe wird gemäß den Merkmalen des Patentanspruches 1 gelöst.

Weiterbildungen der Erfindung ergeben sich aus den abhängigen Ansprüchen.

Besonders vorteilhaft werden erfindungsgemäß normierte Scores gebildet. Besonders vorteilhaft werden diese normierten Zustandsfolgen lediglich zwischen der Anfangs und der Endzeit, d. h. zwischen den beiden Anfangs- und Endpausezuständen berücksichtigt, da so nur dieser Teil des Warppfades für die Berechnung des Rückweisungsscores berücksichtigt wird.

Besonders vorteilhaft werden nach einer Ausführungsformel des erfindungsgemäßen Verfahrens wortindividuelle Rückweisungsschwellen vorgegeben, da dadurch eine noch fehlerfreiere Rückweisung durchgeführt werden kann.

Besonders vorteilhaft wird durch eine weitere Ausführungsform des erfindungsgemäßen Verfahrens das Wortende mit Hilfe gängiger Wortendedetektionsverfahren aufgefunden, um damit den Zeitpunkt für das Wortende festlegen zu können, da kein neuer Aufwand für die Bestimmung des Wortendes getrieben werden muß und da auf bekannte und bewährte Verfahren zurückgegriffen werden kann.

Besonders vorteilhaft kann der Zeitpunkt für das Wortende über die jeweilige Rückweisungsschwelle gefunden werden, indem genau dieses Wort gesucht wird, dessen Rückweisungsschwelle kleiner oder gleich dem aktuellen Rückweisungsscore ist, da sich dann die Endzeit des Wortes aus dem Endpausezustand des jeweiligen Wortes ableiten läßt.

Besonders vorteilhaft kann bei einer weiteren Ausführungsform des erfindungsgemäßen Verfahrens der Endzeitpunkt des Wortes über eine zeitangepaßte und während der Bildung des Warppfades durchgeführte Berechnung der Rückweisungsschwelle gefunden werden, indem zum aktuellen Zeitpunkt das zur jeweiligen Rückweisungsschwelle passende Wort gesucht wird und daraus der Endzeitpunkt der jeweiligen Endpause des Wortes gefunden wird. Dabei kann bevorzugt in Zeitschritten vorgegangen werden, die an das Sprachanalyseverfahren, d. h. das Merkmalsextraktionsverfahren und das Abstandberechnungsverfahren mit der Bildung des Warppfades angepaßt sind.

Besonders vorteilhaft kann der Rückweisungsscore geglättet werden, da somit eine noch genauere Worterkennung möglich ist.

Im folgenden wir die Erfindung anhand von Figuren weiter erläutert.

| | |
|---|---|
| Figur 1 | zeigt ein Spracherkennungsverfahren aus dem Stand der Technik |
| Figur 2 | veranschaulicht die Scoreberechnung mit Hilfe von Hidden Markov Modellen |
| Figur 3 | zeigt eine Zustandsfolge eines Wortes mit einem Anfangs- und einem Endpausezustand |
| Figur 4 | veranschaulicht die Berechnung des Rückweisungsscores nach dem erfindungsgemäßen Verfahren. |

Wie Figur 1 zeigt, besteht der prinzipielle Aufbau eines Spracherkenners aus einer Erkennungsstufe ERK und einer Bewertungsstufe BEW, weiterhin sind in einer Modellbibliothek TB Wortmodelle in Form von Hidden Markov Modellen abgelegt. In den Spracherkenner wird ein Sprachsignal F eingegeben, welcher daraus für verschiedene Worte Wo1 bis WoN die jeweiligen Scores als Sco1 bis ScoN berechnet. Diese jeweiligen Worte werden dann mit ihren berechneten Scores in die Bewertungsstufe BEW eingegeben, welche eine Bewertung durchführt und entweder ein Wort Wo ausgibt oder eine Rückweisung Ruk durchführt. Beispielsweise weist dieser Spracherkenner eine Rückweisungsstrategie auf. In der eigentlichen Spracherkennungsstufe ERK wird aus dem einlaufenden Sprachsignal S ein aktuelles Template des gesprochenen Wortes berechnet. Das Template beschreibt im wesentlichen die spektralen Eigenschaften eines gesprochenen Wortes.

Diese Eigenschaften können durch wortspezifische Muster von spektralen Energien vorgesprochener Wörter, beispielsweise nach dem Template Matching Verfahren oder durch wortspezifische Parameter von Verteilungsfunktionen bezüglich spektralen Energien nach dem Hidden Markov Modell-Verfahren repräsentiert sein. Beispielsweise wird das aktuelle Template mit abgespeicherten Templates in der Bibliothek TB, welche hier mit TWo1 bis TWoN bezeichnet sind, den Wortschatz des Erkenners verglichen. Gängige Methoden zum Vergleich sind die Methode der dynamischen Programmierung und der Viterbi Algorithmus.

Beim Vergleich des aktuellen Templates mit den gespeicherten Templates wird beispielsweise ein wortspezifisches Abstandsmaß in Form eines Scores berechnet. Am Ausgang der Spracherkennungsstufe ERK steht dann für jedes zu erkennende Wort $w_j$ (j = 1, ..., N) der zugehörige Score (Score j; j = 1, ..., N) zur Verfügung. In der Bewertungsstufe BEW wird dann anhand des Scores entschieden, ob ein Wort aus dem Wortschatz gesprochen wurde und wenn ja, welches. Üblicherweise wird dasjenige Wort als erkannt ausgegeben, das den kleinsten Score aufweist. Bei entsprechender Normierung des Scores, wie der Multiplikation mit dem Faktor -1 gehört der größte Score zum erkannten Wort. Das schwierige Problem stellt hierbei die Akzeptanz bzw. die Zurückweisung dar, d. h. die Entscheidung, ob ein dem Erkenner bekanntes Wort gesprochen wurde oder nicht.

Um diese Entscheidung herbeizuführen, wird üblicherweise der Abstand zwischen dem kleinsten und dem zweitkleinsten Score berechnet und das Wort zurückgewiesen, falls dieser Abstand kleiner als eine vorgegebene Schwelle ist. Ein anderes Verfahren besteht beispielsweise darin, ein "Müllwort" als zusätzliches zu erkennendes Wort in den Erkenner aufzunehmen. Ist der Score des "Müllwortes" wesentlichen kleiner, als der kleinste Score der Wörter des Wortschatzes, wird das Wort zurückgewiesen.

Wie Figur 2 als Beispiel zeigt, besteht eine Spracherkennungseinheit, beispielsweise aus einer Stufe für die Merkmalsextraktion MEX einer Abstandsberechnungsstufe DIST und einer Zuordnungsstufe für die Suche des richtigen Wortes mit Anfangs- und Endedektion SU. Der Abstandberechnungsstufe DIST sind Zustandsprototypen in einer Bibliothek SPROT zugeordnet und der Suchstufe SU ist ein Zustandslexikon der einzelnen Hidden Markov Modelle SLEX zugeordnet.

Erfindungsgemäß soll ein Score berechnet werden, der es erlaubt eine Entscheidung über die Rückweisung eines Wortes durchzuführen, ohne einen Vergleich mit den Scores anderer Wörter, wie beispielsweise "Müllwörtern", durchführen zu müssen. Gleichzeitig soll das Verfahren eine geringe Falschakzeptanzrate aufweisen. Erfindungsgemäß wird beispielsweise nach dem neuen Berechnungsverfahren, wie es später beschrieben werden wird, in einer Spracherkennungseinheit, wie sie auch in Figur 1 dargestellt wurde, der neue Score berechnet. In der Bewertungseinheit wird beispielsweise anschließend das Wort mit dem kleinsten Score w ausgewählt. Ist dieser Score kleiner als ein vorgegebener Schwellenwert S, dann wird das Wort akzeptiert und als erkannt ausgegeben. Ist dieser Score größer als ein Schwellenwert S, dann wird das Wort zurückgewiesen. Der Schwellwert S kann auch wortspezifisch mit S(w) gewählt werden:

$Score(w) \le S(w)$ Wort w wird als erkannt ausgegeben

$> S(w)$ Wort wird zurückgewiesen.

Erfindungsgemäß beruht die Berechnung des Scores auf der Methode der Hidden Markov Modelle. Wie Figur 2 weiter zeigt, setzt sich die in Bild 1 gezeigte Spracherkennungsstufe aus mehreren Verarbeitungsstufen zusammen. In der Merkmalsextraktionsstufe MEX werden ca. alle 10 Millisekunden sogenannte Merkmale $x_e$ (e=1, ..., M) berechnet. Die Dimension M des Merkmalsvektors x bewegt sich in der Größenordnung von 10 bis 100. In der Abstandsberechnungsstufe DIST wird der Merkmalsvektor x mit Prototypen, also Templates, der zu erkennenden Wörter verglichen. Diese Prototypen sind als SPROT in einer Bibliothek abgelegt und werden als $y_k$ der Abstandsberechnungsstufe DIST zugeführt. Die Prototypen beschreiben sogenannte HMM-Zustände (HMM: Hidden Markov Modell), wobei jeder Zustand einen Signalabschnitt, wie z. B. ein Phonem eines Wortes statistisch beschreibt. Ein Wort hat dabei ca. 10 bis 30 Zustände. Ausgang der Abstandsberechnungsstufe DIST sind die Abstände als lokale Scores $d(State_k)$ des Merkmalsvektors x zu den Prototypen $y_k$ der Zustände. Beispielsweise werden diese lokalen Scores alle 10 Millisekunden berechnet, wobei ein solcher Zeitabschnitt als Frame bezeichnet wird. Werden die Frames F mit $F_1, ..., F_t$ zeitlich durchnummeriert, so ergeben sich für jeden Frame $F_i$ entsprechende lokale Scores $d_i(State_k)$ :

$$\begin{pmatrix} d_1 & (State_1) \\ & \cdot \\ & \cdot \\ & \cdot \\ d_1 & (State_K) \end{pmatrix} \begin{pmatrix} d_2 & (State_1) \\ & \cdot \\ & \cdot \\ & \cdot \\ d_2 & (State_K) \end{pmatrix} \cdots \begin{pmatrix} d_t & (State_1) \\ & \cdot \\ & \cdot \\ & \cdot \\ d_t & (State_K) \end{pmatrix} \qquad (3^*)$$

Diese Scores werden in der Fachliteratur auch als Emissionswahrscheinlichkeiten bezeichnet, da sie die negative log arithmierte Wahrscheinlichkeit, daß ein Merkmal von einem Zustand emittiert wird, angeben.

In der letzten Stufe der Erkennungseinheit wird bevorzugt der globale Score jedes Wortes berechnet. Dies erfolgt durch Akkumulation der berechneten lokalen Scores über die Zustände, aus denen jedes Wort aufgebaut ist. Die Information, aus welchen Zuständen ein Wort aufgebaut ist, ist in einem Zustandslexikon SLEX verzeichnet. Die generelle Struktur eines Wortes w, das aus K Zuständen besteht, zeigt beispielsweise Figur 3.

Wie Figur 3 zeigt, gibt es für jedes Wort zwei spezielle Zustände, den Anfangspausezustand und der Endepausezustand, welche die Pause vor bzw. nach einem Wort charakterisieren. Sie sind mit den Buchstaben SAP für Anfangspause und SEP für Endpause bezeichnet. Dazwischen befinden sich wortindividuell beliebig viele Zustände, welche mit S1 bis SK bezeichnet sind. Der Rückwärtspfeil bei jedem einzelnen Zustand deutet an, daß eine Folge von Merkmalsvektoren beliebig oft einem Zustand zugeordnet werden kann, bevor der nächste Merkmalsvektor dem nächsten Zustand zugeordnet wird. Die Zuordnung, welcher Merkmalsvektor $X_i$ zum Zeitpunkt i welchem Zustand k(i) zuzuordnen ist, wird aus der Bedingung

$$D_t(w) = \underset{k}{\mathrm{Min}} \sum_{i=1}^{t} d_i(\mathrm{State}_{k(i)}(w)) \qquad (1)$$

bestimmt, d. h. diejenige Zustandsfolge wird gewählt, welche den kleinsten globalen Score $D_t(w)$ ergibt. Die Funktion k(i), welche die Zuordnung festlegt, wird mit Warp-Pfad bezeichnet und beispielsweise durch den sogenannten Viterbi-Algorithmus effizient berechnet. Hierbei stellen die für jedes Wort w in Gleichung 1 gegebenen Scores D(w) eine Berechnung nach dem Stand der Technik dar.

Wie Figur 4 zeigt, werden bei einem beispielhaft dargestellten erfindungsgemäßen Verfahren zunächst die lokalen Scores geeignet normalisiert. Hierzu wird $d_i$ in eine Normalisierungsstufe NORM eingegeben, welche normalisierte Scores $DN_i$ ausgibt. Eine Möglichkeit der Normalisierung besteht dabei in der Subtraktion aller lokalen Scores eines Frames um einen Wert $g_i$, der beispielsweise nach Formel

$$g_i = \underset{k,w}{\mathrm{Min}}\, d_i(\mathrm{State}_k(w)) \qquad (2^*)$$

berechnet wird, nach der auch in der Patentschrift WO-A-96/27871 vorgegangen wird. Bessere Ergebnisse liefert jedoch die Formel

$$g_i = \underset{k,w}{\mathrm{Min}}(d_i(\mathrm{State}_k w) \cdot c_k) \qquad (2)$$

mit geeigneten Zustandsabhängigen Faktoren $c_{km}$. Die in Formel 3* dargestellte Folge der lokalen Scores wird erfindungsgemäß durch die normalisierte Folge

$$dN_i(\mathrm{State}_k) = d_i(\mathrm{State}_k) - g_i, \qquad k = 1,...,K,AP,EP \qquad (3)$$

mit AP: Anfangspausezustand und EP: Endpausezustand ersetzt. Mit diesen normierten lokalen Scores kann entsprechend Gleichung 1 der Vergleichsscore

$$DN_t(w) = \underset{k}{\mathrm{Min}} \sum_{i=1}^{t} dN_i(\mathrm{State}_{k(i)}(w)) \qquad (4)$$

mit dem Warp-Pfad k(i) berechnet werden. Hierbei müssen die Zustände k(i), die in Figur 3 gezeigte Reihenfolge Anfangspausezustand SAP, Zustand 1 S1, ..., Zustand K Sk, Endpausezustand SEP durchlaufen. Im Anschluß kann beispielsweise der aus Gleichung 4 gewonnene Warppfad k(i) benutzt werden, um den Rückweisungsscore

$$RSC_{t_e}(w) = \frac{1}{(t_e - t_a + 1)} \sum_{i=t_a}^{t_e} dN_i(State_{k(i)}(w)) \qquad (5)$$

zu berechnen. Für diese erfindungsgemäße neue Berechnung des Rückweisungsscores wird nur derjenige Teil des Warppfades benutzt, der zwischen Anfangspausezustand und Endpausezustand liegt. In Gleichung 5 ist der Anfangszeitpunkt, wo der Warp-Pfad die Anfangspause verläßt mit $t_a$ und der Endzeitpunkt, wo der Warp-Pfad in die Endpause geht, mit $t_e$ bezeichnet.

Die gewählte Vorgehensweise hat den Vorteil, daß das Verfahren sehr einfach implementiert werden kann, indem parallel zum Viterbipfad k(i) neben Scores $DN_t(w)$, wie in Gleichung 4 der Summenanteil des Rückweisungsscores und die Zeit $t-t_a+1$ mitgeführt wird.

Bevorzugt wird in der in Figur 1 dargestellten Bewertungseinheit BEW zunächst dasjenige Wort $w_R$ bestimmt, das den besten (kleinsten) Vergleichsscore besitzt. Danach wird getestet, ob der Rückweisungsscore dieses so gewählten Wortes über einer vorzugsweise wortspezifischen Schwelle liegt:

$$w_R = \arg\min_j DN(w_j)$$

$$RSC_{t_e}(w_R) = \begin{cases} \leq S(w_R) & \text{Wort wird anerkannt} \\ > S(w_R) & \text{Wort wird zurückgewiesen} \end{cases} \qquad (6)$$

Der Zeitpunkt $t_e$ kann beispielsweise mit klassischen Verfahren zur Wortdedektion bestimmt werden. Ein alternatives, robusteres Verfahren zur Bestimmung des Zeitpunktes $t_e$ ist folgende Vorschrift:

Man finde das erste $t_e$ für das es ein Wort $w_j$ mit der Eigenschaft

$$RSC_{t_e}(w_j) \leq S(w_j) \qquad j = 1,\dots,N \qquad (7)$$

gibt. Das erkannte Wort wird bestimmt nach

$$w_R = \arg\min_j DN_{t_e}(w_j) \qquad (8)$$

Eine Verfeinerung des Verfahrens ergibt sich dadurch, indem nach dem ersten $t_e$, welches Gleichung 7 erfüllt, das Maximum der Gleichung

$$S(w_j) - RSC_t(w_j) \qquad j = 1,\dots,N,\ t \in, [t_e, t_e+\Delta t] \qquad (9)$$

bestimmt wird. Im Anschluß wird für den Zeitpunkt $t'_{é}$, welcher Gleichung 9 maximiert, wiederum Gleichung 8 angewandt. Das sich dann ergebende Wort $W_R$ wird als erkannt akzeptiert.

Als günstig hat sich hierbei ein Wert von $\Delta t$ in der Größenordnung von 200ms erwiesen. Eine weitere Verfeinerung des Verfahrens ergibt sich durch die Glättung des Rückweisungsscores nach der Formel

$$RSC'_t(w) = a \cdot RSC_t(w) + (1-a) \cdot RSC'_{t-1}(w) \quad (10)$$

wobei der geglättete Wert $RSC'_t(w)$ in den Gleichungen 6-9 benutzt wird. Zur Glättung hat sich als günstiger Faktor für den Wert a 0,35 erwiesen.

**Patentansprüche**

1. Verfahren zur Einzelwortspracherkennung mit Hidden Markov Modellen mit folgenden Merkmalen:

   a) Aus einem Sprachsignal (S) werden Merkmalsvektoren (x) gebildet , wozu die spektralen Merkmale des Sprachsignals analysiert werden;
   b) es werden die Abstände (d) zwischen den Merkmalsvektoren und Hidden Markov Wordmodellzustandsfolgen in Form von lokalen Scores (Sco) berechnet;
   c) mittels Viterbi-Suche (SU) wird eine Zuordnung einer Hidden Markov Wordmodellzustandsfolge eines Wortes (Wo) zu den Merkmalsvektoren (x) durchgeführt;
   d) es wird der kleinste lokale Score gesucht und mit ihm werden die anderen lokalen Scores (NORM) normiert;
   e) es wird eine normierte Zustandsfolge gebildet, die einen Anfangspausezustand (SAP) am Anfang eines Wortes und einen Endpausezustand (SEP) am Ende eines Wortes aufweist;
   f) es wird ein Vergleichsscore als globaler Score nach

$$DN_t(w) = \underset{k}{Min} \sum_{i=1}^{t} dN_i(State_{k(i)}(w))$$

   berechnet; mit dN: normierter Score, State: Zustand und w: Wort;
   g) es wird das Wort (w) bestimmt, dessen Zustandsfolge den geringsten Score aufweist;
   h) es werden die Zeitpunkte $t_a$, $t_e$ des Wortes bestimmt, an denen der Anfangspausezustand (SAP) verlassen, bzw. in den Endpausezustand (SEP) durch die Zustandsfolge des Wortes übergegangen wird;
   i) es wird ein Rückweisungsscore nach

$$RSC_{t_e}(w) = \frac{1}{(t_e - t_a + 1)} \sum_{i=t_a}^{t_e} dN_i(State_{k(i)}(w))$$

   berechnet;
   j) das Wort wird zurückgewiesen, falls der Rückweisungsscore eine vorgegebene Rückweisungsschwelle überschreitet.

2. Verfahren nach Anspruch 1, bei dem eine wortindividuelle Rückweisungsschwelle vorgegeben wird.

3. Verfahren nach einem der Ansprüche 1 bis 2, bei dem der Zeitpunkt $t_e$ mittels eines Verfahrens für die Wortendedetektion gefunden wird.

4. Verfahren nach einem der Ansprüche 1 bis 2, bei dem der Zeitpunkt $t_e$ über die Rückweisungsschwelle bestimmt wird, indem dasjenige Wort (w) gesucht wird, das die Schwellenbedingung erfüllt und dessen $t_e$ verwendet wird.

5. Verfahren nach Anspruch 4, bei dem ein Maximum der Wortindividuellen Rückweisungsschwelle gemäß

$$S(w_j)\text{-}RSC_t(w_j) \qquad j = 1,...,N,\ t \in,\ [t_e, t_e+\Delta]$$

gefunden wird und diesem Zeitpunkt $t_e'$ wiederum nach

$$w_R = \arg\min_j DN_{t_e'}(w_j)$$

das entsprechende Wort (w) gesucht wird.

**6.** Verfahren nach einem der vorangehenden Ansprüche, bei dem der Rückweisungsscore mit

$$RSC'_t(w) = a \cdot RSC_t(w) + (1-a) \cdot RSC'_{t-1}(w)$$

geglättet wird.

**7.** Verfahren nach einem der vorangehenden Ansprüche, bei dem die Normierung mit einem multiplikativen zustandsabhängigen Faktor durchgeführt wird.

**Claims**

**1.** Method for speech recognition of individual words with the aid of hidden Markov models, having the following features:

a) feature vectors (x) are formed from a speech signal (S), for which purpose the spectral features of the speech signal are analysed;
b) the spacings (d) between the feature vectors and hidden Markov word model state sequences are calculated in the form of local scores (Sco);
c) a Viterbi search (SU) is used to assign a hidden Markov word model state sequence of a word (Wo) to the feature vectors (x);
d) a search is made for the smallest local score, and it is used to normalize the other local scores (NORM);
e) a normalized state sequence is formed which has a start pause state (SAP) at the start of a word and an end pause state (SEP) at the end of a word;
f) a reference score is calculated as global score using

$$DN_t(w) = \min_k \sum_{i=1}^{t} dN_i\ (State_{k(i)}\ (w))\ ;$$

where dN is the normalized score, State is the state and w is the word;
g) the word (w) whose state sequence has the lowest score is determined;
h) the instants $t_a$, $t_e$ of the word are determined at which the start pause state (SAP) is left, or at which there is a transition to the end pause state (SEP) through the state sequence of the word;
i) a rejection score is calculated using

$$RCS_{t_e}(w) = \frac{1}{(t_e - t_a + 1)} \sum_{i=t_a}^{t_e} dN_i\ (State_{k(i)}\ (w))\ ;$$

and
j) the word is rejected if the rejection score exceeds a prescribed rejection threshold.

**2.** Method according to Claim 1, in which a word-specific rejection threshold is prescribed.

**3.** Method according to one of Claims 1 to 2, in which the instant $t_e$ is found by means of a method for word end detection.

**4.** Method according to one of Claims 1 to 2, in which the instant $t_e$ is determined via the rejection threshold by searching for that word (w) which fulfils the threshold condition and whose $t_e$ is used.

**5.** Method according to Claim 4, in which a maximum of the word-specific rejection threshold is found in accordance with

$$S(w_j)-RSC_t(w_j) \qquad j = 1, ..., N, t \in [t_e, t_e+\Delta]$$

and a search is made in turn at this instant $t_e'$ for the corresponding word (w) using

$$w_R = \arg\min_j DN_{t'_e}(w_j) \quad .$$

**6.** Method according to one of the preceding claims, in which the rejection score is smoothed with the aid of

$$RSC'_t(w) = a \cdot RSC_t(w) + (1-a) \cdot RSC'_{t-1}(w).$$

**7.** Method according to one of the preceding claims, in which the normalization is carried out with the aid of a multiplicative state-dependent factor.

## Revendications

**1.** Procédé pour la reconnaissance de la parole de mots isolés par des modèles de Markov cachés, ayant les caractéristiques suivantes :

a) on forme des vecteurs de caractéristiques (x) à partir d'un signal de parole (S), les caractéristiques spectrales du signal de parole étant analysées à cet effet ;
b) on calcule les distances (d) entre les vecteurs de caractéristiques et des suites d'états de modèles de mots de Markov cachés sous la forme de scores locaux (Sco) ;
c) on effectue au moyen d'une recherche de Viterbi (SU) une association d'une suite d'états de modèles de mots de Markov cachés d'un mot (Wo) aux vecteurs de caractéristiques (x) ;
d) on cherche le plus petit score local et on norme avec lui les autres scores locaux (NORM) ;
e) on forme une suite d'états normée qui comporte un état de pause initiale (SAP) au début d'un mot et un état de pause finale (SEP) à la fin d'un mot ;
f) on calcule un score de comparaison comme score global selon

$$DN_t(w) = \min_k \sum_{i=1}^{t} dN_i(State_{k(i)}(w))$$

avec dN : score normé, State : état et w : mot ;
g) on détermine le mot (w) dont la suite d'états présente le plus petit score ;
h) on détermine les instants $t_a$, te du mot auxquels la suite d'états du mot quitte l'état de pause initiale (SAP)

et respectivement passe dans l'état de pause finale (SEP) ;
i) on calcule un score de rejet selon

$$RSC_{t_e}(w) = \frac{1}{(t_e - t_a + 1)} \sum_{i=t_a}^{t_e} dN_i \ (State_{k(i)}(w))$$

j) on rejette le mot si le score de rejet dépasse un seuil de rejet prescrit.

**2.** Procédé selon la revendication 1, dans lequel on prescrit un seuil de rejet spécifique au mot.

**3.** Procédé selon l'une des revendications 1 à 2, dans lequel on trouve l'instant $t_e$ au moyen d'un procédé pour la détection de fin de mot.

**4.** Procédé selon l'une des revendications 1 à 2, dans lequel on détermine l'instant $t_e$ par l'intermédiaire du seuil de rejet en cherchant le mot (w) qui satisfait à la condition de seuil et dont le $t_e$ est utilisé.

**5.** Procédé selon la revendication 4, dans lequel on trouve un maximum des seuils de rejet spécifiques au mot selon

$$S(w_j) - RSC_t(w_j)$$

$$j = 1, ..., N, t \in, [t_e, t_e + \Delta]$$

et on cherche à nouveau le mot correspondant (w) à cet instant $t_e$' selon :

$$w_R = \underset{j}{\arg\min} \ DN_{t_e'}(w_j)$$

**6.** Procédé selon l'une des revendications précédentes, dans lequel on lisse le score de rejet avec :

$$RSC'_t(w) = a \cdot RSC_t(w) + (1 - a) \cdot RSC'_{t-1}(w)$$

**7.** Procédé selon l'une des revendications précédentes, dans lequel on effectue la normalisation avec un facteur multiplicatif dépendant de l'état.

FIG 1

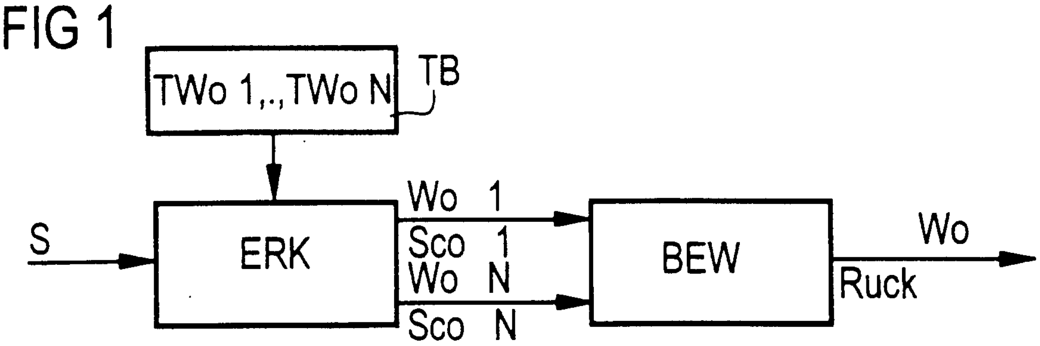


FIG 2

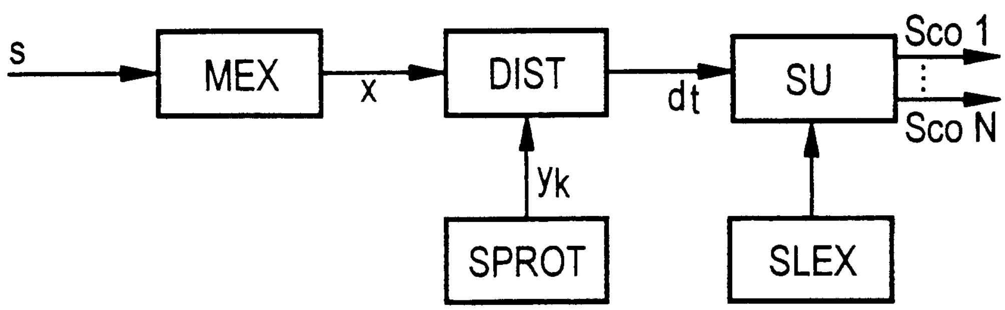


FIG 3

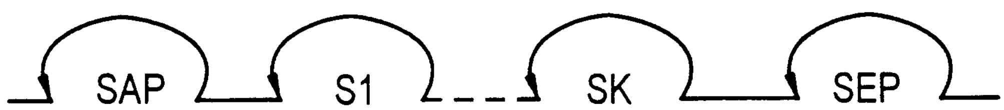


FIG 4